# EUROPEAN PATENT APPLICATION

(11) **EP 2 985 326 A2**
(43) Date of publication of application: **17.02.2016**
(21) Application number: 15181005.8
(22) Date of filing: 13.08.2015
(51) Int. Cl.: C09D 201/00, C09D 7/12, H01L 21/00

(54) **COATING COMPOSITION AND THERMOPLASTIC RESIN COMPOSITION FOR LASER DIRECT STRUCTURING AND METHOD OF LASER DIRECT STRUCTURING USING THE SAME**

(30) Priority: 13.08.2014 KR 20140105465
(71) Applicant: Opto Line Co. Ltd., Gyeonggi-do 18624 (KR)
(72) Inventor: Kim, Ki Hyun, Giheung-gu, Yongin-si Gyeonggi-do, 16951 (KR); Sa, Jin Sung, Giheung-gu, Yongin-si Gyeonggi-do, 16975 (KR)
(74) Representative: Michalski Hüttermann & Partner Patentanwälte mbB

(57) **Abstract**

Provided are a coating composition and a thermoplastic resin composition for laser direct structuring, and a method of laser direct structuring using the same. More specifically, compositions for laser direct structuring are provided in which an additive which can enhance heat resistance is introduced when forming the coating composition or thermoplastic resin composition for laser direct structuring, and laser direct structuring is performed using the same so that the molded product and circuit is formed as a single body. Consequently, the process may be simplified and the number of parts reduced to thereby reduce weight and enhance economic competitiveness.

## Description

### BACKGROUND OF THE INVENTION

The present invention disclosed herein relates to introducing an additive which can improve flame retardancy when forming a coating composition and a thermoplastic resin composition, and performing laser direct structuring using the same, so that a molded product and circuit may be formed as a single body. Thus, the process may be simplified and the number of parts reduced to thereby reduce weight and improve economic competitiveness.

Recently, laser direct structuring (LDS) which forms accurate patterns and circuits through laser treatment and plating has been proposed. Laser direct structuring may form patterns and circuits on an injection molded product through a simple process which includes laser activation and electroless plating. Specifically, a computer-controlled laser beam travels along a molded interconnect device (MID) and activates the plastic surface at locations on which a conductive path is to be disposed, after which small conductive path widths (for example, about 150 µm or less) may be obtained by using a composition for laser direct structuring. Spacing between the conductive paths may be about 150 µm or less. In laser direct structuring, since the pattern is formed by using a laser, a detailed pattern may advantageously be drawn, and thermocompression bonding by manufacturing a separate patterning mold or mask is not required for forming the pattern. Instead, various patterning operations may advantageously be possible through simply adjusting the program data which is related to the movement path of a laser emitter.

Looking at a typical process of laser direct structuring, a pattern may be formed through irradiating a base frame, which is included in a chip antenna, with a laser and then performing a metallization treatment which includes a plating treatment. However, in the typical laser direct structuring process as described above, laser directly irradiates the base frame, and thus there are limitations of the pattern becoming smeared or the pattern peeling off after the plating treatment has been performed.

Moreover, to manufacture an electronic device having a given application through a laser direct structuring process, electronic components are to be installed on a board on which a conductive pattern is formed, and the board is limited in having to withstand a high-temperature heat-treating process. For example, flame retardancy, heat resistance, etc. are required when designing the antenna of a notebook computer. Since some flame retardant additives may have a negative effect on the mechanical properties, for example, the heat distortion temperature (HDT) and/or impact strength, of a polycarbonate material, there is difficulty in providing a flame retardant and heat resistant composition which may be used as a composition for laser direct structuring while also having sufficient mechanical properties.

### [PRIOR ART DOCUMENTS]

### [Patent Documents]

(Patent Document 1) Japanese Patent Application Laid-open Publication No. 2010-517256 (Publication Date: November 9, 2012)
(Patent Document 2) Japanese Patent Application Laid-open Publication No. 2007-154071 (Publication Date: June 21, 2007)

### SUMMARY OF THE INVENTION

An object of the present invention is to provide a coating composition and a thermoplastic resin composition for laser direct structuring, in which the flame retardancy and heat resistance thereof are improved through introducing an additive.

Another object of the present invention is to provide a micro circuit board which includes the coating composition for laser direct structuring, and is manufactured through laser direct structuring.

Still another object of the present invention is to provide an electronic device which is manufactured to include the micro circuit board, and thus is miniaturized, reduced in weight, and multi-featured; may be freely designed; and is highly integrated.

Accordingly, according to an embodiment of the present invention, there is provided a coating composition for laser direct structuring, including about ≥60 to about 90 wt% of a thermoplastic resin, about ≥0.1 to about ≤ 20 wt% of an additive for laser direct structuring, about ≥0.1 to about ≤ 10 wt% of a seed-forming agent, and about ≥0.001 to about ≤ 15 wt% of a metal powder.

In an exemplary embodiment, the coating composition for laser direct structuring may further include about ≥0.1 to about ≤ 10 wt% of a dispersing agent.

In an exemplary embodiment, the thermoplastic resin may include one or more selected from the group consisting of polypropylene, polyester, polyphenylene oxide, polycarbonate, polyamide, poly (arylene ether), acrylonitrile butadiene styrene copolymer, polybutylene terephthalate, polyethylene terephthalate, poly urethane, poly acryl resin, poly vinyl chloride, polyphthalamide, polyphenylene sulfide, liquid crystal polymer, polyamideimide, and mixtures thereof; the additive for laser direct structuring may include one or more selected from the group consisting of a heavy metal mixture oxide spinel, a copper salt, and mixtures thereof; the seed-forming agent may include one or more selected from the group consisting of a copper salt and a copper salt complexing agent; and the metal powder may include one or more selected from the group consisting of iron, manganese, cobalt, chrome, copper, vanadium, nickel, and mixtures thereof.

In an exemplary embodiment, the metal powder may include the nickel and iron at a weight ratio of about 1 : ≥0.85 to ≤ 1.75, or the nickel, iron, and cobalt at a weight ratio of about 1 : 0.85 to 1.75 : 0.75 to 2.25.

In an exemplary embodiment, the metal powder may include the nickel and chrome at a weight ratio of about 1 : 1.85 to ≤ 3.35, or the nickel, chrome, and manganese at a weight ratio of about 1 : 1.85 to 3.25 : 0.35 to 0.85.

In an exemplary embodiment, the metal powder may have an average diameter of about ≥ 0.1 to about ≤ 10 µm, and a specific surface area of about ≥0.1 to about ≤ 1 m²/g.

In an exemplary embodiment, the composition for laser direct structuring may further include one or more flame retardants selected from the group consisting of a nitrogen-containing mixture, a phosphorus-containing mixture, a phosphorus-nitrogen condensate, and mixtures thereof, the one or more flame retardants being included in about ≥ 1 to about ≤ 40 parts by weight with respect to 100 parts by weight of thermosetting resin.

In an exemplary embodiment, the coating composition for laser direct structuring may further include bisphenol A diphosphate, the bisphenol A diphosphate being included in about 6 to about 20 parts by weight with respect to 100 parts by weight of thermosetting resin.

According to another embodiment of the present invention, there is provided a thermoplastic resin composition for laser direct structuring, comprising about ≥ 80 to about ≤ 95 wt% of a thermoplastic resin, about ≥ 0.1 to about ≤ 10 wt% of an additive for laser direct structuring, about ≥ 0.1 to about ≤ 5 wt% of a seed-forming agent, and about ≥ 0.001 to about ≤ 10 wt% of a metal powder.

In an exemplary embodiment, the metal powder may include the nickel and iron at a weight ratio of about 1 : ≥ 0.85 to ≤ 1.75, or the nickel, iron, and cobalt at a weight ratio of about 1 : 0.85 to 0.75 : 0.75 to 2.25 when the metal powder further includes cobalt.

In an exemplary embodiment, the metal powder may include the nickel and chrome at a weight ratio of about 1 : ≥ 1.85 to ≤ 3.35, or the nickel, chrome, and manganese at a weight ratio of about 1 : 1.85 to 3.25 : 0.35 to 0.85 when the metal powder further includes manganese.

According to an embodiment of the present invention, there is provided a method of laser direct structuring, including a first step, in which a coating composition is coated on a board for laser direct structuring to form a coating layer, and then the coating layer is irradiated with a laser to form a micro circuit on the coating layer and board; and a second step, in which electroless plating is performed on the board on which the micro circuit was formed.

In an exemplary embodiment, the first step may include a 1-1 step, in which an additive for laser direct structuring is added to solvent to obtain a mixed solution A; a 1-2 step, in which a seed-forming agent is added to solvent to obtain a mixed solution B; and a 1-3 step, in which a thermoplastic resin, the mixed solution A, and the mixed solution B are mixed together.

In an exemplary embodiment, the coating procedure in the first step may be performed to a thickness of about ≥ 50 to about 500 µm; and the micro circuit in the first step may have a width of about ≥ 1 to about 100 µm.

According to another embodiment of the present invention, there is provided a method of laser direct structuring, including a first step, in which the thermoplastic resin composition is mixed and extruded to form a board, and then the board is irradiated with a laser to form a micro circuit; and a second step, in which electroless plating is performed on the board on which the micro circuit was formed in the first step.

According to yet another embodiment of the present invention, there is provided a micro circuit board including a coating layer formed with the coating composition for laser direct structuring, and a micro circuit formed through directly structuring the coating layer with a laser.

According to still another embodiment of the present invention, there is provided a micro circuit board including a micro circuit formed through directly structuring a surface of a board, including the thermosetting resin composition, with a laser.

According to an embodiment of the present invention, there is provided an electronic device including the micro circuit board.

### DETAILED DESCRIPTION OF PREFERRED EMBODIMENTS

Preferred embodiments of the present invention will be described below in more detail. The present invention may, however, be embodied in different forms and should not be constructed as limited to the embodiments set forth herein. Rather, these embodiments are provided so that this disclosure will be thorough and complete, and will fully convey the scope of the present invention to those skilled in the art.

Hereinafter, an exemplary embodiment of the present invention will be described.

The exemplary embodiment of the present invention relates to a coating composition for laser direct structuring, and a coating layer may be formed on a board by using the coating composition, after which a laser direct structured product may be produced to manufacture a micro circuit board which has exceptional flame retardancy. Therethrough, a micro circuit may be formed as a single body on various surfaces of a molded product, thereby simplifying the process, and the micro circuit having a high degree of freedom in the design thereof, and an electronic device including the same, may be manufactured.

Here, the exemplary embodiment of the present invention provides a method of laser direct structuring, including a first step, in which a coating composition is coated on a board for laser direct structuring, and then irradiated with a laser to form a micro circuit, and a second step, in which electroless plating is performed on the board on which the micro circuit was formed in the first step. Hereinafter, a more detailed description will be given, in steps, of the exemplary embodiment of the present invention

In a method of laser direct structuring according to the exemplary embodiment of the present invention, the coating composition in the first step may be obtained through mixing the thermoplastic resin, additive for laser direct structuring, and seed-forming agent in solvent.

Specifically, the coating composition may be obtained by using a method which includes a step 1-1, in which an additive for laser direct structuring is added to solvent to obtain a mixed solution A; a step 1-2, in which a seed-forming agent is added to solvent to obtain a mixed solution B; and a step 1-3, in which the thermoplastic resin, the mixed solution A, and the mixed solution B are mixed together.

The step 1-1 may desirably further include a dispersing agent. Although the order in which each of components is mixed is not particularly limited, the additive for laser direct structuring may be added after the dispersing agent has been added to solvent.

The coating composition performs an intermediary function of attaching the thermoplastic resin, which is included in the board for laser direct structuring, to the plating fluid which is used in a metallization step. The coating composition may be coated on the board for laser direct structuring to form a coating layer, thereby preventing the pattern from becoming smeared or peeling off after the plating treatment which is a subsequent process, and increasing durability. Although a method of coating the coating composition is not particularly limited, a method which includes paste screen coating, roll coating, a sputtering method, an evaporation method, etc., may be used in performing the coating. The coating procedure may be performed to a thickness of about 50 to about 500 µm, but is not limited thereto.

The board for laser direct structuring in the first step is a frame in which the pattern is formed through laser activation and metallization of the frame is realized through plating treatment. Any polymer which can be injection molded may be used as the board for laser direct structuring. The board for laser direct structuring may be formed of a thermoplastic resin, and preferably, polyester, polypropylene, nylon, acrylonitrile butadiene styrene (ABS) resin, polyamide, polyethylene terephthalate (PET), polybutylene terephthalate (PBT), liquid crystal polymer, polycarbonate, polyphthalate amide, polyphenylene oxide, and resin composites thereof may be used as the board for laser direct structuring. The board for laser direct structuring may be manufactured using known methods, for example, the board may be manufactured through injection molding of the mixture which forms the board, but is not particularly limited thereto.

In the first step of the method of laser direct structuring according to the exemplary embodiment of the present invention, the coating composition is coated on the board for laser direct structuring to form a coating layer, and then the coating layer is irradiated with a laser to form a micro circuit on the coating layer and board.

The laser may travel along the intended, pre-programmed patterning path, and may be irradiated while repeatedly following certain sections according to the shape and thickness of the pattern, or following a given path. As the laser, a fiber laser, an ultraviolet (UV) laser, an excimer laser, etc., or electromagnetic radiation from an ultraviolet emitter, may be used.

As a lasing medium of the laser electromagnetic radiation, yttrium aluminum garnet (YAG), yttrium orthovanadate (YVO₄), ytterbium (YB), CO₂, etc. may be used. As a wavelength of the laser electromagnetic radiation, about 500 to about 1500 nm or about 5 to about 15 µm may be desirable, and, for example, 532 nm, 1064 nm, 1090 nm, 9.3 µm, 10.6 µm may be used. When fabricating by using laser electromagnetic radiation, an algorithm may be used which processes and fabricates three-dimensional forms (for example, a method in which a 3D processing program processes a three-dimensional part and divides the part into 10 sections according to height to control the fabrication height of the laser). Additional fabrication of the outer lines to realize uniformity in the plating of fabricated (plating surface) and unfabricated surfaces may be performed by using laser electromagnetic radiation. The output power of the laser electromagnetic radiation may be, for example, about 2 to about 30 W, or desirably about 15 to about 30 W.

In the method of laser direct structuring according to the exemplary embodiment of the present invention, the second step is a step in which electroless plating is performed on the coating layer and board, on which micro circuits were formed in the first step. Plating conditions characteristically are not changed according to the type of thermoplastic resin included in the coating composition which was coated in the first step.

More specifically, catalytic particles are provided to the board on which a micro circuit was formed through laser irradiation in the first step, which promotes the forming and attaching of a metal layer for plating inside the micro circuit, after which electroless plating may be performed.

As the catalytic particles, palladium, silver, platinum, rhodium, indium, ruthenium, etc. may be used, but are not particularly limited thereto, and when production cost and sintering temperature are considered, palladium and rhodium may desirably be used. As a source of the palladium, palladium chloride or palladium sulfate may be used, but is not particularly limited thereto.

The catalyst particles may be deployed through immersing the board on which the micro circuit has been formed in a treatment fluid for imparting catalyst for about 1 to about 5 minutes at a temperature of about 30 to about 40 °C, and then immersing the board in catalyst activating solution for about 1 to about 3 minutes at a temperature of about 30 to about 60 °C. Here, the treatment fluid for imparting catalyst may be an aqueous solution containing palladium chloride and hydrochloric acid, but is not particularly limited thereto. Amount of palladium chloride which is used in the aqueous solution may be, for example, about 10 to about 450 ml per 1 liter of deionized water. Amount of anhydrous hydrochloric acid which is used in the aqueous solution may be about 150 to about 300 ml per 1 liter of deionized water. The catalyst activating solution may be an aqueous solution which contains ammonium bifluoride, but is not particularly limited thereto. Amount of ammonium bifluoride which is in the aqueous solution may be about 70 to about 150 g/L.

Next, the surface of the micro circuit which was imparted with catalyst is plated with a metal layer by using an electroless method. The metal layer may be one selected from among the group consisting of copper, nickel, gold, silver, and alloys thereof, and may be a single layered or laminated structure. In the laminated structure, each layer may be of a different metal or the same metal.

For example, when electroless plating is performed using a copper layer, the micro circuit board on which catalyst has been imparted is immersed in electroless copper plating solution. The electroless copper plating solution may contain about 55 to about 65 ml of a copper make-up of electrolytic bath, about 55 to about 65 ml of an alkali make-up, about 15 to about 20 ml of a copper salt complexing agent, about 0.1 to about 0.2 ml of a stabilizer, and about 8 to about 10 ml of formaldehyde, per 1 liter of deionized water. The copper make-up of electrolytic bath may contain about 6 to about 12 parts by weight of copper sulfate, about 1 to about 1.5 parts by weight of polyethylene glycol, about 0.01 to about 0.02 parts by weight of stabilizer, and about 78 to about 80 parts by weight of water. The alkali make-up may contain about 40 to about 50 parts by weight of sodium hydroxide, about 0.01 to about 0.02 parts by weight of stabilizer, and about 50 to about 60 parts by weight of water. The copper salt complexing agent may contain about 49 to about 50 parts by weight of sodium hydroxide, about 0.01 to about 0.02 parts by weight of stabilizer, and about 50 to about 51 parts by weight of water. The stabilizer may contain about 0.2 to about 0.3 parts by weight of potassium selenocyanate, about 5 to about 6 parts by weight of potassium cyanide, about 0.3 to about 0.4 parts by weight of sodium hydroxide, and about 92 to about 93 parts by weight of water.

To electrolessly plate the copper layer, the micro circuit board on which catalyst was imparted may be immersed in copper plating fluid at about 41 to about 55 °C, at a precipitation rate of about 0.5 to about 0.7 µm per 10 minutes, and then washed with water.

In another example, when electroless plating is performed using a nickel layer, the micro circuit board on which catalyst has been imparted is immersed in electroless nickel plating solution. The electroless nickel plating solution may contain phosphorus (P). The electroless nickel plating may be performed two or more times, and a first nickel plating solution may contain about 15 to about 30 parts by weight of nickel sulfate, about 1 to 10 parts by weight of a stabilizer, and about 70 to about 80 parts by weight of water. A second nickel plating solution may contain about 1 to 10 parts by weight of ammonia, about 10 to about 20 parts by weight of a hypophosphite, about 10 to about 20 parts by weight of a stabilizer, and about 70 to about 80 parts by weight of water.

The stabilizer may contain about 0.2 to about 0.3 parts by weight of potassium selenocyanate, about 5 to about 6 parts by weight of potassium cyanide, about 0.3 to about 0.4 parts by weight of sodium hydroxide, and about 92 to about 93 parts by weight of water.

The temperature of the electroless nickel plating solution may be about 55 to about 70 °C, and the pH of the electroless nickel plating solution may be about 5.5 to about 6.0.

The concentration of nickel metal which is contained in the electroless nickel plating solution may be about 5.0 to about 6.0 g/L. The concentration of phosphorus which is contained in the electroless nickel plating solution may be about 3 to about 6 wt%. For example, to electrolessly plate the nickel layer, the micro circuit on which catalyst has been imparted may be immersed in nickel plating solution at a precipitation rate of about 5 to 6 µm/hr, and then washed with water.

Here, after imparting catalyst on the board on which the micro circuit has been formed, electroless plating of the metal may be performed repeatedly to form the plating as a laminated structure, and each of the laminated layers may be composed of a different metal.

In the method of laser direct structuring according to an exemplary embodiment, the micro circuit in the first step may have a width of about 1 to about 100 µm, and may desirably have a width of about 1 to about 50 µm, and even more desirably have a width of about 1 to about 30 µm. The micro circuit is formed directly on the board which is coated with the coating composition by using the method of laser direct structuring, and the narrower the width the micro circuit is formed to have, the more highly integrated the board becomes. The width of the micro circuit is limited in being difficult to be formed as less than 1 µm, and when the width is larger than 100 µm, there is a limitation in the integration becoming lower.

Here, for a conductive pattern to be suitably realized on the board for laser direct structuring, finding the blending ratio of the thermoplastic resin, additive for laser direct structuring, and seed-forming agent, of the coating composition is important.

An exemplary embodiment of the present invention provides a coating composition for laser direct structuring which includes a thermoplastic resin, an additive for laser direct structuring, a seed-forming agent, and a metal powder, and hereinafter, each of constituent parts of the exemplary embodiment of the present invention will be described in detail.

Among the components of the coating composition for laser direct structuring according to the exemplary embodiment of the present invention, the thermoplastic resin may be included in an amount of about 60 to 90 wt% of the solid constituents of the coating composition, and may desirably be included in an amount of about 80 to about 90 wt% and more desirably about 85 to about 90 wt% of the solid constituents of the coating composition.

When the thermoplastic resin included is less than 60 wt% of the solid constituents of the coating composition, the coating has difficulty in attaching well to the board for laser direct structuring, and when the thermoplastic resin included is greater than 90 wt%, the amount of the remaining additives which are included in the coating is low, and thus there is a limitation of the pattern becoming smeared or peeling off after the plating treatment.

The thermoplastic resin may include one or more selected from the group consisting of polypropylene, polyester, polyphenylene oxide, polycarbonate, polyamide, poly (arylene ether), acrylonitrile butadiene styrene copolymer, polybutylene terephthalate, polyethylene terephthalate, poly urethane, poly acryl resin, poly vinyl chloride, polyphthalamide, polyphenylene sulfide, liquid crystal polymer, polyamideimide, and mixtures thereof, and may desirably include one or more selected from the group consisting of polyamide, poly urethane, poly acryl resin, polyester, polyphenylene oxide, acrylonitrile butadiene styrene copolymer, polybutylene terephthalate, polyethylene terephthalate, polyamideimide, and mixtures thereof.

The coating composition for laser direct structuring according to the exemplary embodiment of the present invention includes the additive for laser direct structuring, and the additive for laser direct structuring is positioned on a surface of the board for laser direct structuring which is formed of the thermoplastic resin composition, and exposed to a laser beam so that metal atoms which are included in the surface of the board become activated. Specifically, the additive for laser direct structuring is exposed to the laser beam so that metal atoms become activated upon laser irradiation, and in areas which are not exposed to the laser beam, metal atoms do not become activated. More specifically, as the laser is drawing the circuit pattern on the part, metal atoms which are included in the thermoplastic resin composition become ejected to form a rough surface in which metal particles are buried, and such metal particles will function as nuclei for crystal growth in the plating process, for example the copper plating process, to follow. Therethrough, the additive for laser structuring allows the area which was exposed to and then etched by the laser beam to be plated so that a conductive structure may be formed. Here, the expression "may be plated" indicates that material of a nearly completely uniform metal plating layer may be plated on the area which had been etched with the laser.

Another electroless plating process, other than the copper plating, which may be used includes gold plating, nickel plating, silver, plating, zinc plating, tin plating, etc., but is not limited thereto.

The additive for laser direct structuring may include one or more selected from the group consisting of a heavy metal mixture oxide spinel, a copper salt, and mixtures thereof, but is not limited thereto. The heavy metal mixture oxide spinel may be copper chrome oxide spinel, and the copper salt may be one selected from the group consisting of copper hydroxide phosphate, copper phosphate, copper sulfate, and copper(I) thiocyanate, and copper chrome oxide spinel may desirably be used. When the heavy metal mixture oxide spinel is used, a composition may be used in a method of laser direct structuring while improving the flame retardancy of the composition, and thus the heat distortion temperature, mechanical properties (for example, impact strength), etc. may be advantageously improved.

The additive for laser direct structuring may be included in an amount of about 0.1 to about 20 wt% of the solid constituents of the composition, and may desirably be included in an amount of about 0.1 to about 15 wt% of the solid constituents of the composition. When the amount of additive for laser direct structuring included is less than 0.1 wt%, there may be a limitation in plate forming, which will be performed in the next process, being difficult, and when the amount included is greater than 20 wt%, an excessive amount of the additive is included, and thus there may be a limitation in the physical properties of heat distortion temperature and/or mechanical properties being degraded.

The coating composition for laser direct structuring according to the exemplary embodiment of the present invention includes a seed-forming agent, and the seed-forming agent, in the activation of the coating composition through the laser and in the plating treatment, may be used when having a function of facilitating an easy formation of the seeds for plating, and may desirably include one or more selected from the group consisting of a copper salt and a copper salt complexing agent. More desirably, copper acetate, copper acetate monohydrate, ethylenediaminetetraacetic acid, etc. may be used.

The seed-forming agent may be included in an amount of about 0.1 to about 10 wt% of the solid constituents of the composition, and may desirably be included in an amount of about 0.1 to 5 wt%. When outside the above range, there is a limitation in seed not easily being formed.

The coating composition for laser direct structuring according to the exemplary embodiment of the present invention includes metal powder, and the metal powder is uniformly introduced as a fine particle in the coating composition, and may perform a function of improving heat resistance. The metal powder may be included in an amount of about 0.001 to about 15 wt%, and may desirably be included in an amount of about 0.001 to about 10 wt%, and more desirably be included in an amount of about 0.001 to about 5 wt%. When the metal powder is included in an amount less than 0.001 wt%, the amount of the metal powder is low, such that there is a limitation in it being difficult for the heat resistance to be sufficiently improved, and when an excessive amount of greater than 15 wt% of the metal powder is included, there is a limitation in the physical properties, etc. of the board which is manufactured to include the coating composition, being degraded.

In the coating composition for laser direct structuring according to the exemplary embodiment of the present invention, the metal powder may be one or more selected from the group consisting of iron, manganese, cobalt, chrome, copper, vanadium, nickel, and mixtures thereof. The iron, manganese, cobalt, chrome, copper, vanadium, nickel, etc. are metals which have excellent heat resistance, and the metals may be used alone or in the form of an alloy.

For example, as the iron powder, iron powder obtained through heat reduction of iron pentacarbonyl, iron(II) phosphate, iron(III) phosphate, etc. may be used. The iron carbonyl may be an activated pure iron obtained through applying carbon monoxide (CO), heat, pressure, etc. to iron (Fe) to produce iron pentacarbonyl (CsFeO₅), and then re-applying heat thereto. The iron carbonyl particles are uniform and fine spherical particles having a large surface area, and may be included in the coating composite according to exemplary embodiments of the present invention to thereby exhibit excellent heat resistance.

The metal powder includes nickel and iron, the nickel and iron may be included at a weight ratio of about 1 : 0.85 to 1.75, and when the metal powder further includes cobalt, the nickel, iron, and cobalt may desirably be included at a weight ratio of about 1 : 0.85 to 1.75 : 0.75 to 2.25. When the metal powder includes nickel and chrome, the nickel and chrome may be included at a weight ratio of about 1 : 1.85 to 3.35, and when the metal powder further includes manganese, the nickel, chrome and manganese may desirably be included at a weight ratio of about 1 : 1.85 to 3.25 : 0.35 to 0.85.

The metal powder may have an average diameter of about 0.1 to about 10 µm, and desirably an average diameter of about 2 to about 8 µm.

In the coating composition for laser direct structuring according to the exemplary embodiment of the present invention, the metal powder may have a specific surface area of about 0.1 to about 1 m²/g, desirably about 0.2 to about 1 m²/g, and more desirably about 0.4 to about 1 m²/g.

In the coating composition for laser direct structuring according to the exemplary embodiment of the present invention, the coating composition may further include the dispersing agent.

The dispersing agent is not limited and may be any dispersing agent which can increase the dispersion efficiency of the additive for laser direct structuring. The dispersing agent may desirably be one or more selected from the group consisting of a surfactant; an amine compound selected from among a primary, secondary, or tertiary amine; an ammonium carbonate-based compound; a phosphorus compound; a sulfur compound, and a fatty acid. The dispersing agent may be included in an amount of about 0.1 to about 10 wt% of the solid constituents of the coating composition for LDS, and desirably about 0.1 to about 5 wt%. When the amount of the dispersing agent is outside the above range, the dispersing efficiency may be degraded.

The surfactant is not limited and may be any surfactant which improves the wettability of the coating composition, and a sodium lauryl sulfate (SLS), a sodium lauryl ether sulfate (SLES), a linear alkylbenzene sulfonate (LAS), a monoalkyl phosphate (MAP), an acyl isethionate (SCI), an alkyl glyceryl ether sulfonate (AGES), an acyl glutamate, an acyl taurate, a fatty acid metal salt, an ethoxylated fatty alcohol, an ethoxylated fatty acid, an ethoxylated alkyl phenol, a fatty acid alkanolamide, an ethoxylated fatty acid alkanolamide, a fatty amine oxide, a fatty amido amine oxide, a glyceryl fatty acid ester, a sorbitan, an ethoxylated sorbitan ester, an alkyl poly glycoside, an ethylene/propylene oxide copolymer, an ethoxylated-propoxylated fatty alcohol, etc may desirably be used as the surfactant.

The coating composition may further include solvent to control the concentration of the coating composition. The solvent may be any solvent which can dissolve the thermoplastic resin, seed-forming agent, additive for laser direct structuring, and dispersing agent. As the solvent, distilled water, an organic solvent, etc. may be used, but is not limited thereto. More desirably, distilled water may be used, and may be included as the remainder of the coating composition.

In the coating composition for laser direct structuring according to the exemplary embodiment of the present invention, the coating composition for laser direct structuring may further include one or more flame retardant selected from the group consisting of a nitrogen-containing mixture, a phosphorus-containing mixture, a phosphorus-nitrogen condensate, magnesium hydroxide, and mixtures thereof. The flame retardant may desirably be magnesium hydroxide. The flame retardant may be included in about 1 to about 30 parts by weight with respect to 100 parts by weight of thermosetting resin, and desirably be included in about 1 to about 15 parts with respect to 100 parts by weight of thermosetting resin.

Since dehydration of the magnesium hydroxide begins at the high temperature of about 340 °C, the magnesium hydroxide may advantageously be used in any resin. Magnesium hydroxide may be introduced in particle form, and the average particle diameter which is measured using a laser diffraction method may be no greater than 2 µm, and desirably about 0.4 to about 1.0 µm. The magnesium hydroxide particle may have a specific surface area which is measured using the Brunauer-Emmett-Teller (BET) method of no greater than 20 m²/g, and desirably about 1 to about 10 m²/g. The magnesium hydroxide according to the exemplary embodiment of the present invention may include as an impurity any iron or manganese compounds, which may be included in a metal-equivalent amount of no greater than 0.02 wt%, and desirably no greater than 0.01 wt%.

The magnesium hydroxide may be used in which the surface has been modified with a surface treating agent, and the surface treating agent may be one or more selected from the group consisting of a higher fatty acid, an anionic surfactant, a phosphate ester, a silane coupling agent, a titanate coupling agent, an aluminum coupling agent, and a polyol fatty acid ester.

In the coating composition for laser direct structuring according to an exemplary embodiment of the present invention, the coating composition may further include one or more additives selected from the group consisting of a glass fiber, a ceramic filler, an antioxidant, an acrylonitrile styrene acrylate, and a phosphate ester. The additives may effectively activate further the formation, through plating, of the metal plating layer on a surface of the micro circuit, and have the functions of reinforcing the mechanical strength of the board on which a microcircuit has been formed, or compensating structural defects.

The glass fiber may desirably be included in about 5 to about 45 parts by weight with respect to 100 parts by weight of the additive for laser direct structuring.

The ceramic filler may include one selected from the group consisting of titanium dioxide, calcium carbonate, talc, clay, mica, aluminum silicate, silica, calcium metasilicate, alumina trihydrate, and mixtures thereof, but is not limited thereto, and may be included in about 0.1 to about 5 parts by weight with respect to 100 parts by weight of the additive for laser direct structuring, and desirably about 0.1 to about 3 parts by weight.

The antioxidant may be included in about 0.1 to about 5 parts by weight with respect to 100 parts by weight of the additive for laser direct structuring, and desirably about 0.1 to about 1 parts by weight.

The acrylonitrile styrene acrylate may be included in about 5 to about 20 parts by weight with respect to 100 parts by weight of the additive for laser direct structuring, and desirably about 10 to about 20 parts by weight.

The phosphate ester may be included in about 0.5 to about 15 parts by weight with respect to 100 parts by weight of the additive for laser direct structuring, and desirably about 5 to about 15 parts by weight.

In the coating composition for laser direct structuring according to the exemplary embodiment of the present invention, the coating composition for laser direct structuring may further include bisphenol A diphosphate, and the bisphenol A diphosphate may further effectively promote the attachment of the metal layer on the surface of the micro circuit through plating. The bisphenol A diphosphate may be included in about 6 to 20 parts by weight with respect to 100 parts by weight of the additive for laser direct structuring, and desirably about 10 to about 20 parts by weight.

An exemplary embodiment of the present invention provides a thermoplastic resin; an additive for laser direct structuring; a seed-forming agent; and a thermoplastic resin composition which includes metal powder, and a board for laser direct structuring may be produced by using the thermoplastic resin composition, after which a laser direct structured product may be formed to manufacture the micro circuit board which has superb heat resistance. Therethrough, the micro circuit may be formed as a single body on various surfaces of a molded product, thereby simplifying the process, and the micro circuit board which has a high degree of freedom of design, and an electronic device including the same, may be manufactured.

Here, an exemplary embodiment of the present invention provides a method of laser direct structuring, including a first step, in which the thermoplastic resin composition is mixed and then extruded to manufacture a board, after which the board is irradiated with a laser to form a micro circuit, and a second step, in which electroless plating is performed on the board on which the micro circuit was formed in the first step. Hereinafter, a detailed description will be given, in steps, of the exemplary embodiment of the present invention

In the first step of the method of laser direct structuring according to the exemplary embodiment of the present invention, the thermoplastic resin composition may be mixed and then injection molded in an extruder to form the board for laser direct structuring. The board is a frame on which a pattern will be formed and which will be metalized through a plating treatment, in subsequent steps. The board which is formed through the described method may be formed by applying a known method on pellets which have been formed through extruding the thermoplastic resin composition.

The laser may travel along the intended, pre-programmed patterning path, and may be irradiated while repeatedly following certain sections according to the shape and thickness of the pattern, or following a given path. As the laser, a fiber laser, an ultraviolet (UV) laser, an excimer laser, etc., or electromagnetic radiation from an ultraviolet emitter, may be used.

As a lasing medium of the laser electromagnetic radiation, for example, yttrium aluminum garnet (YAG), yttrium orthovanadate (YVO₄), ytterbium (YB), CO₂, etc. may be used. As a wavelength of the laser electromagnetic radiation, about 500 to about 1500 nm or about 5 to about 15 µm may be desirable, and, for example, 532 nm, 1064 nm, 1090 nm, 9.3 µm, 10.6 µm may be used. When fabricating by using laser electromagnetic radiation, an algorithm may be used which processes and fabricates three-dimensional forms (for example, a method in which a 3D processing program processes a three-dimensional part and divides the part into 10 sections according to height to control the fabrication height of the laser). Additional fabrication of the outer lines to realize uniformity in the plating of fabricated (plating surface) and unfabricated surfaces may be performed by using laser electromagnetic radiation. The output power of the laser electromagnetic radiation may be, for example, about 2 to about 30 W, or desirably about 15 to about 30 W.

In the method of laser direct structuring according to the exemplary embodiment of the present invention, the second step is a step in which electroless plating is performed on the board on which micro circuits were formed in the first step. More specifically, catalytic particles are provided to the board, on which a micro circuit was formed through laser irradiation in the first step, which promotes the forming and attaching of a metal layer for plating inside the micro circuit, after which electroless plating may be performed.

As the catalytic particles, palladium, silver, platinum, rhodium, indium, ruthenium, etc. may be used, but are not particularly limited thereto, and when production cost and sintering temperature are considered, palladium and rhodium may desirably be used. As a source of the palladium, palladium chloride or palladium sulfate may be used, but is not particularly limited thereto.

The catalyst may be deployed through immersing the board, on which the micro circuit has been formed, in a treatment fluid for imparting catalyst for about 1 to about 5 minutes at a temperature of about 30 to about 40 °C, and then immersing the board in catalyst activating solution for about 1 to about 3 minutes at a temperature of about 30 to about 60°C. Here, the treatment fluid for imparting catalyst may be an aqueous solution containing palladium chloride and hydrochloric acid, but is not particularly limited thereto. Amount of palladium chloride which is used in the aqueous solution may be, for example, about 10 to about 450 ml per 1 liter of deionized water. Amount of anhydrous hydrochloric acid which is used in the aqueous solution may be about 150 to about 300 ml per 1 liter of deionized water. The catalyst activating solution may be an aqueous solution which contains ammonium bifluoride, but is not particularly limited thereto. Amount of ammonium bifluoride which is in the aqueous solution may be about 70 to about 150 g/L.

Next, the surface of the micro circuit which was imparted with catalyst is plated with a metal layer by using an electroless method. The metal layer may be one selected from among the group consisting of copper, nickel, gold, silver, and alloys thereof, and may be a single layered or laminated structure. In the laminated structure, each layer may be of a different metal or the same metal.

For example, when electroless plating is performed using a copper layer, the micro circuit board on which catalyst has been imparted is immersed in electroless copper plating solution. The electroless copper plating solution may contain about 55 to about 65 ml of a copper make-up of electrolytic bath, about 55 to about 65 ml of an alkali make-up, about 15 to about 20 ml of a copper salt complexing agent, about 0.1 to about 0.2 ml of a stabilizer, and about 8 to about 10 ml of formaldehyde, per 1 liter of deionized water. The copper make-up of electrolytic bath may contain about 6 to about 12 parts by weight of copper sulfate, about 1 to about 1.5 parts by weight of polyethylene glycol, about 0.01 to about 0.02 parts by weight of stabilizer, and about 78 to about 80 parts by weight of water. The alkali make-up may contain about 40 to about 50 parts by weight of sodium hydroxide, about 0.01 to about 0.02 parts by weight of stabilizer, and about 50 to about 60 parts by weight of water. The copper salt complexing agent may contain about 49 to about 50 parts by weight of sodium hydroxide, about 0.01 to about 0.02 parts by weight of stabilizer, and about 50 to about 51 parts by weight of water. The stabilizer may contain about 0.2 to about 0.3 parts by weight of potassium selenocyanate, about 5 to about 6 parts by weight of potassium cyanide, about 0.3 to about 0.4 parts by weight of sodium hydroxide, and about 92 to about 93 parts by weight of water.

To electrolessly plate the copper layer, the micro circuit board on which catalyst was imparted may be immersed in copper plating fluid at about 41 to about 55 °C, at a precipitation rate of about 0.5 to about 0.7 µm per 10 minutes, and then washed with water.

In the exemplary embodiment of the present invention, for the board for laser direct structuring to suitably realize a conductive pattern, it is important to find the blending ratio of the thermoplastic resin, additive for laser direct structuring, and seed-forming agent, which form the main framework of the board for laser direct structuring.

An exemplary embodiment of the present invention provides a thermoplastic resin composition for laser direct structuring which includes a thermoplastic resin; an additive for laser direct structuring, a seed-forming agent; and metal powder. The thermoplastic resin composition for laser direct structuring has the same composition as the coating composition for laser direct structuring, and thus description thereof will not be given.

An exemplary embodiment of the present invention includes the coating layer which is formed using the coating composition for laser direct structuring, and provides the micro circuit which has been directly structured by using a laser on the coating layer. In addition, the exemplary embodiment of the present invention also provides the micro circuit board which includes the micro circuit which has been directly structured by using the laser on the surface of the board which includes the thermoplastic resin composition.

The micro circuit board may be manufactured through forming the conductive micro circuit on various surfaces of a molded product, and thus have an advantageously high degree of freedom in the design thereof. In accordance with the exemplary embodiment of the present invention, by using a board which is coated with the coating composition having excellent flame retardancy and heat resistance, or a board produced from the thermoplastic resin composition having excellent flame retardancy and heat resistance, an electronic component, etc. may be mounted on the board through a high temperature process. Therethrough, modularizing as a single system is possible, and the miniaturization and lightening of an electronic device including a micro circuit bard according to the present invention is possible, thereby improving the economics of the process, and by directly structuring the circuit which has a fine circuit line width, a high degree of integration may be realized.

An exemplary embodiment of the present invention provides an electronic device which includes the micro circuit board. The electronic device according to the embodiment of the present invention which includes the micro circuit board has a high degree of freedom in the design thereof, is miniaturized and reduced in weight such that the economics of the process is improved, and may be manufactured as an antenna for mobile electronic devices, a radio-frequency identification (RFID) antenna, an electronic sub assembly for automobiles, a white goods, a near field communication (NFC) antenna, a cable replacement part, a semiconductor integrated circuit composite part, etc.

Exemplary embodiments of the present invention will be described in further detail through the following Examples. However, the following Examples are given merely as examples of exemplary embodiments of the present invention, and do not limit the scope of the present invention in any way.

### [Examples]

### Preparation Example 1. Preparation of Coating Composition for Laser Direct Structuring

6 g of a dispersing agent (Tego Dispers 655, Evonik Korea) and 3 g of a surfactant (EFKA-3570, Sungwon Materials) were added to 91 g of distilled water, and then completely dissolved after stirring for over 30 minutes at room temperature. 100 g of a copper chrome-based pigment (P-70, Shin Ceramics) was slowly added thereto and stirred for 5 minutes at room temperature to prevent agglomeration, thereby producing 200 g of Compound A.

50 g of copper acetate (Sejin CI), a seed-forming agent, was added to 150 g of distilled water and then completely dissolved therein through stirring for over 10 minutes at room temperature to produce 200 g of Compound B.

7.5 g of Compound B was added to 60 g of a polyamide-based resin (Poonglim), which is a thermoplastic resin, and completely dissolved therein through stirring at room temperature. Next, 5 g of the Compound A (CAS number 7439-89-6; average particle diameter, measured through laser scattering using a Beckman Coulter LS13320, of 4.1 µm; BET specific surface area of 0.44 m²/g), 2.5 g of iron powder, and 0.25 g of bisphenol A diphosphate were added thereto and stirred at room temperature, thereby producing a coating composition for laser direct structuring.

### Preparation Example 2. Preparation of Coating Composition for Laser Direct Structuring

The coating composition for laser direct structuring was prepared through the same method as in Preparation Example 1, except for using 5 g of metal powder which was mixed according to the below Table 1, instead of the iron powder used in the Preparation Example 1.

**[Table 1]**

| 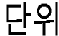 (g) | Nickel | Iron | Cobalt | Chrome | Manganese |
|---|---|---|---|---|---|
| Preparation Example 2 | 10 | 5 | - | - | - |
| Preparation Example 3 | 10 | 8 | - | - | - |
| Preparation Example 4 | 10 | 10 | - | - | - |
| Preparation Example 5 | 10 | 15 | - | - | - |
| Preparation Example 6 | 10 | 20 | - | - | - |
| Preparation Example 7 | 10 | 10 | 5 | - | - |
| Preparation Example 8 | 10 | 10 | 10 | - | - |
| Preparation Example 9 | 10 | 10 | 15 | - | - |
| Preparation Example 10 | 10 | 10 | 20 | - | - |
| Preparation Example 11 | 10 | 15 | 5 | - | - |
| Preparation Example 12 | 10 | 15 | 15 | - | - |
| Preparation Example 13 | 10 | 15 | 20 | - | - |
| Preparation Example 14 | 10 | - | - | 20 | - |
| Preparation Example 15 | 10 | - | - | 20 | 5 |

### Preparation Example 16. Preparation of Coating Composition for Laser Direct Structuring

The coating composition for laser direct structuring was prepared through the same method as in Preparation Example 1, except for further adding 1 g of magnesium hydroxide powder.

### Preparation Example 17. Preparation of Coating Composition for Laser Direct Structuring

The coating composition for laser direct structuring was prepared through the same method as in Preparation Example 4, except for further adding 1 g of magnesium hydroxide powder.

### Application Example 1. Manufacturing of Laser Direct Structured Product

(1) Step 1: The coating composition for laser direct structuring, prepared in Preparation Example 1, was coated to a thickness of 300 µm through screen coating on a board which was obtained through injection molding by using a polycarbonate resin (LUPOY SC1004A, and the surface of the board, which was coated with the coating composition, was irradiated with laser to obtain a micro circuit. The processing conditions for the laser irradiation are as shown below in Table 2.

**[Table 2]**

| Item | Condition |
|---|---|
| Lasing Medium | YAG |
| Laser Wavelength | 1064 nm |
| Laser Output Power | 25 W |
| Laser Velocity | 890 mm/min |
| Laser Width of the Micro Circuit | 30 µm |

(2) Step 2: The board of Step 1, on which the micro circuit was formed, was plated with copper. First, the board on which the micro circuit was formed in Step 1 was pretreated with ultrasonic waves to remove dust and bubbles. The conditions of the ultrasonic treatment are as shown below in Table 3.

**[Table 3]**

| Item | Condition |
|---|---|
| Ultrasonic Medium | 90 parts by weight deionized water + 8 parts by weight triethanolamine |
| Ultrasonic Medium Temperature | 60 °C |
| Ultrasonic Treatment Duration | 1 minute |

After the ultrasonic treatment, a catalyst imparting process was performed through immersing the board in a treatment fluid for imparting catalyst, the conditions of which are as shown below in Table 4.

**[Table 4]**

| Item | | Condition |
|---|---|---|
| Manufacturing Composition of Treatment Fluid for Imparting Catalyst | Deionized Water | 1liter |
| | Palladium Chloride | 350 mg |
| | Anhydrous Hydrochloric Acid | 200 ml |
| Temperature of Treatment Fluid for Imparting Catalyst | | 35 °C |
| Immersion Time | | 4 minutes |

After imparting the catalyst, the board was immersed in a catalyst activating solution to activate the catalyst, and the conditions of the catalyst activating process are as shown below in Table 5.

**[Table 5]**

| Item | | Condition |
|---|---|---|
| Manufacturing Composition of Catalyst Activating Solution | Deionized Water | 1 liter |
| | ammonium bifluoride NH₄HF₂ | 110 g |
| Temperature of Catalyst Activating Solution | | 60 °C |
| Immersion Time | | 1 minute |

Next, the board was immersed in electroless copper plating fluid to form a copper layer, and the conditions of the process for forming the copper layer are as shown below in Table 6.

**[Table 6]**

| Item | | Condition |
|---|---|---|
| Manufacturing Composition of Electroless Copper Plating Fluid | Deionized Water | 1600 ml |
| | Copper Make-up of Electrolytic Bath | 100 ml |
| | Alkali Make-up | 78 ml |
| | Complexing Agent | 50 ml |
| | Stabilizer | 2 ml |
| | Formaldehyde | 6.5 g |
| | Copper Sulfate | 8 parts by weight |
| | Polyethylene Glycol | 1 parts by weight |
| Manufacturing Composition of Copper Make-up of Electrolytic Bath | (PEG 20000) | |
| | Stabilizer | 0.04 parts by weight |
| | Deionized Water | 85 parts by weight |
| Manufacturing Composition of Alkali Additive | Sodium Hydroxide | 40 parts by weight |
| | Stabilizer | 0.04 parts by weight |
| | Deionized Water | 65 parts by weight |
| Complexing Agent | Sodium Hydroxide | 50 parts by weight |
| | Stabilizer | 0.05 parts by weight |
| | Deionized Water | 50 parts by weight |
| Stabilizer | Potassium Selenocyanate | 0.5 parts by weight |
| | Potassium Cyanide | 7 parts by weight |
| | Sodium Hydroxide | 0.5 parts by weight |
| | Deionized Water | 92 parts by weight |
| Temperature of Plating Fluid | | 53 °C |
| Plating Rate and Time | | 0.5 µm/10min, 250 minutes |

### Application Example 2. Manufacturing of Laser Direct Structured Product

The laser direct structuring product was manufactured through the same method as in Application Example 1, except for using the coating of the below Table 7 instead of the coating of Preparation Example 1.

**[Table 7]**

| Application example | Coating Used |
|---|---|
| Application example 2 | Preparation Example 2 |
| Application example 3 | Preparation Example 3 |
| Application example 4 | Preparation Example 4 |
| Application example 5 | Preparation Example 5 |
| Application example 6 | Preparation Example 6 |
| Application example 7 | Preparation Example 7 |
| Application example 8 | Preparation Example 8 |
| Application example 9 | Preparation Example 9 |
| Application example 10 | Preparation Example 10 |
| Application example 11 | Preparation Example 11 |
| Application example 12 | Preparation Example 12 |
| Application example 13 | Preparation Example 13 |
| Application example 14 | Preparation Example 14 |
| Application example 15 | Preparation Example 15 |
| Application example 16 | Preparation Example 16 |
| Application example 17 | Preparation Example 17 |

### Comparative Example 1. Laser Direct Structuring

Laser direct structuring was performed through the same method as in Application Example 1, except the coating composition used in Application Example 1 was excluded.

### Comparative Example 2. Laser Direct Structuring

Laser direct structuring was performed through the same method as in Application Example 1, except the metal powder used in Application Example 1 was excluded.

### Comparative Example 3. Laser Direct Structuring

Laser direct structuring was performed through the same method as in Application Example 1, except for additionally introducing 150 g of a polyamide-based resin (Poonglim), which is a thermoplastic resin.

### Comparative Example 4. Laser Direct Structuring

Laser direct structuring was performed through the same method as in Application Example 1, except for additionally introducing 20 g of a polyamide-based resin (Poonglim), which is a thermoplastic resin.

### Comparative Example 5. Laser Direct Structuring

Laser direct structuring was performed through the same method as in Application Example 1, except for additionally introducing 15 g of iron powder.

### Comparative Example 6. Laser Direct Structuring

Laser direct structuring was performed through the same method as in Application Example 4, except for additionally introducing 15 g of metal powder.

### Experimental Example 1. Verifying Micro Circuit Formation Through Laser Direct Structuring

To verify the forming of the micro circuit pattern when laser direct structuring is performed after the board has been coated using the coating composition according to an exemplary embodiment of the present invention, Application Examples 1 to 17 were performed. For verification about the micro circuit pattern when laser direct structuring a laser direct structured product on which a coating has not been coated, Comparative Example 1 was performed.

Therethrough, the micro circuit pattern was verified to have been formed in Application Examples 1 to 17, and verified to have not been formed in Comparative Example 1.

### Experimental Example 2. Verifying Micro Circuit Formation Through Laser Direct Structuring 2

After washing the laser direct structured products manufactured in Application Examples 1 to 17, and Comparative Examples 3 and 4 with deionized water, a cutting line was drawn on the plating layer along the gridded lines which were spaced 2 mm apart, an adhesive tape was affixed thereon, and then the adhesive tape was lifted off in a vertical direction. In the laser direct structuring products which were manufactured in Application Examples 1 to 17, no pieces of the plating layer were consequently peeled off by sticking to the adhesive tape.. Moreover, among the areas which were to be plated, portions which were not plated could not be found. However, in the laser direct structuring products manufactured in Comparative Examples 3 and 4, peeling, caused by some pieces of the plating layer sticking to the adhesive tape, was verified to have occurred.

Therethrough, in the laser direct structured product which was manufactured according to an exemplary embodiment of the present invention, it was verified that, in the forming of the micro circuit, the copper layer is firmly plated on the laser direct structured portion of the surface of the board only in cases where the laser direct structured product is manufactured to be within the range of the composition according to the exemplary embodiment of the present invention.

### Experimental Example 3. Verifying Fire Resistance Through Glass Transition and Heat Distortion Temperatures 1

To verify the heat resistance of the micro circuit board which was manufactured by using the coating composition according to an exemplary embodiment of the present invention, the glass transition and heat distortion temperatures were measured of Application Examples 1 to 17, and Comparative Examples 2 to 4, which are in accordance with exemplary embodiments of the present invention.

The glass transition temperatures were measured through differential scanning calorimetry (DSC), and the heat distortion temperatures were measured in accordance with ASTM D648 (18.56 kgf). The glass transition temperature represents the temperature which is related to glass transition, in which glassy materials transition from a solid phase to a liquid phase, and the heat distortion temperature (HDT), as a measure showing the highest possible limit, represents the temperature at which some amount of distortion occurs when a given load is applied. Results from testing the heat resistance of the micro circuit board in which the coating composition was used therein, are as shown in the following Table 8.

**[Table 8]**

| Examples | Glass Transition Temperature (Tg, °C) | Heat Distortion Temperature (°C) |
|---|---|---|
| Application Example 1 | 248 | 180 |
| Application Example 2 | 251 | 182 |
| Application Example 3 | 251 | 181 |
| Application Example 4 | 255 | 185 |
| Application Example 5 | 253 | 183 |
| Application Example 6 | 252 | 183 |
| Application Example 7 | 253 | 182 |
| Application Example 8 | 253 | 182 |
| Application Example 9 | 253 | 181 |
| Application Example 10 | 255 | 185 |
| Application Example 11 | 252 | 182 |
| Application Example 12 | 253 | 182 |
| Application Example 13 | 253 | 182 |
| Application Example 14 | 253 | 182 |
| Application Example 15 | 253 | 182 |
| Application Example 16 | 253 | 182 |
| Application Example 17 | 253 | 182 |
| Comparative Example 1 | 180 | 153 |
| Comparative Example 2 | 194 | 154 |
| Comparative Example 5 | 225 | 166 |
| Comparative Example 6 | 232 | 167 |

According to the above Table 8, the glass transition and heat distortion temperatures of the micro circuit board which includes the coating which was manufactured in Application Examples 1 to 17, which are exemplary embodiments of the present invention, are verified as being far superior to the glass transition and heat distortion temperatures of the micro circuit boards of Comparative Examples 1, which excludes the coating, and 2, which excludes the metal powder. The glass transition and heat distortion temperatures were also verified as being excellent in comparison with those of Comparative Examples 5 and 6, which were manufactured to include excessive amounts of the metal powder. The glass transition and heat distortion temperatures of coatings which include excessive amounts of metal powder were actually found to be degraded when compared to coatings in which appropriate amounts of metal powder were included therein.

Also, when using the coating made in the Application Examples 1 to 17 of the present invention, the glass transition temperatures and the heat distortion temperatures may be seen as being largely similar, and in Application Example 4 in which the metal powder was introduced as nickel and iron mixed at a weight ratio of about 1:1, it may be seen that the properties were most favorable. In Application Example 10 in which nickel, iron, and cobalt were mixed at a weight ratio of about 1:1:2 and introduced, it may also be seen that the glass transition temperature and the heat distortion temperature were favorable.

Therethrough, the heat resistance of the laser direct structuring product which used the coating according to an exemplary embodiment of the present invention was verified as being improved by using the coating which was manufactured to include the metal powder, and the glass transition and heat distortion temperatures were found to be changed through the inclusion of various additives.

### Preparation Example 18. Preparation of Thermoplastic Resin Composition for Laser Direct Structuring

95 g of a polypropylene (Honam Petrochemical), 5 g of a copper chrome-based pigment (Shin Ceramics), 2.5 g of copper acetate (Sejin CI), 2.5 g of an iron powder, and 0.5 g of bisphenol A diphosphate were mixed to obtain a thermoplastic resin composition for extruding.

### Preparation Example 19. Preparation of Thermoplastic Resin Composition for Laser Direct Structuring

A thermoplastic resin composition for extruding was composed through the same method as in Preparation Example 18, except for using 2.5 g of a metal powder which was mixed in the ratio of the below Table 9 instead of the iron powder which was used in Preparation Example 18.

**[Table 9]**

| Unit (g) | Nickel | Iron | Cobalt | Chrome | Manganese |
|---|---|---|---|---|---|
| Preparation Example 19 | 10 | 5 | - | - | - |
| Preparation Example 20 | 10 | 8 | - | - | - |
| Preparation Example 21 | 10 | 10 | - | - | - |
| Preparation Example 22 | 10 | 15 | - | - | - |
| Preparation Example 23 | 10 | 20 | - | - | - |
| Preparation Example 24 | 10 | 10 | 5 | - | - |
| Preparation Example 25 | 10 | 10 | 10 | - | - |
| Preparation Example 26 | 10 | 10 | 15 | - | - |
| Preparation Example 27 | 10 | 10 | 20 | - | - |
| Preparation Example 28 | 10 | 15 | 5 | - | - |
| Preparation Example 29 | 10 | 15 | 15 | - | - |
| Preparation Example 30 | 10 | 15 | 20 | - | - |
| Preparation Example 31 | 10 | - | - | 20 | - |
| Preparation Example 32 | 10 | - | - | 20 | 5 |

### Application Example 18. Manufacturing of Laser Direct Structured Product

The thermoplastic resin composition for extruding, prepared in the above Preparation Examples 18 to 32, was injection molded using an extruder to produce a board for LDS (refer to Table 10, below), and a micro circuit was formed through laser irradiation of a surface of the base frame. In addition, the board for laser direct structuring, on which the micro circuit was formed thereon, was electrolessly plated to thereby manufacture a laser direct structured product. The laser irradiation and electroless plating were performed under conditions identical to those of Application Example 1, described above.

**[Table 10]**

| Application Examples | |
|---|---|
| Application Example 18 | Preparation Example 18 |
| Application Example 19 | Preparation Example 19 |
| Application Example 20 | Preparation Example 20 |
| Application Example 21 | Preparation Example 21 |
| Application Example 22 | Preparation Example 22 |
| Application Example 23 | Preparation Example 23 |
| Application Example 24 | Preparation Example 24 |
| Application Example 25 | Preparation Example 25 |
| Application Example 26 | Preparation Example 26 |
| Application Example 27 | Preparation Example 27 |
| Application Example 28 | Preparation Example 28 |
| Application Example 29 | Preparation Example 29 |
| Application Example 30 | Preparation Example 30 |
| Application Example 31 | Preparation Example 31 |
| Application Example 32 | Preparation Example 32 |

### Comparative Example 7. Laser Direct Structuring

Laser direct structuring was performed through the same method as in the above Application Example 18, except the metal powder was excluded.

### Comparative Example 8. Laser Direct Structuring

Laser direct structuring was performed through the same method as in the above Application Example 18, except 30 g of a polypropylene, which is a thermoplastic resin, was introduced.

### Comparative Example 9. Laser Direct Structuring

Laser direct structuring was performed through the same method as in the above Application Example 18, except 200 g of a polypropylene, which is a thermoplastic resin, was introduced.

### Comparative Example 10. Laser Direct Structuring

Laser direct structuring was performed through the same method as in the above Application Example 18, except 15 g of an iron powder was used.

### Comparative Example 11. Laser Direct Structuring

Laser direct structuring was performed through the same method as in the above Application Example 21, except 15 g of an iron powder was used.

### [Experimental Examples]

### Experimental Example 4. Verifying Micro Circuit Formation Through Laser Direct Structuring 2

After washing the laser direct structured products of the above Application Examples 18 to 32, and Comparative Examples 8 and 9 with deionized water, a cutting line was drawn on the plating layer along the gridded lines which were spaced 2 mm apart, an adhesive tape was affixed thereon, and then the adhesive tape was lifted off in a vertical direction. In the laser direct structuring products which were manufactured in Application Examples 18 to 32, no pieces of the plating layer were consequently peeled off by sticking to the adhesive tape. Moreover, among the areas which were to be plated, portions which were not plated could not be found. However, in the laser direct structuring products manufactured in Comparative Examples 8 and 9, peeling, caused by some pieces of the plating layer sticking to the adhesive tape, was verified to have occurred.

Therethrough, in the laser direct structured product which was manufactured according to an exemplary embodiment of the present invention, it was verified that, in the forming of the micro circuit, the copper layer is firmly plated on the laser direct structured portion of the surface of the board, only in cases where the laser direct structured product is manufactured to be within the range of the composition according to the exemplary embodiment of the present invention.

### Experimental Example 5. Verifying Fire Resistance Through Glass Transition and Heat Distortion Temperatures 2

To verify the heat resistance of the micro circuit board which was manufactured by using the thermoplastic resin composition according to an exemplary embodiment of the present invention, the glass transition and heat distortion temperatures were measured of Application Examples 18 to 32, and Comparative Examples 7, 10, and 11, which are in accordance with exemplary embodiments of the present invention.

The glass transition temperatures were measured through differential scanning calorimetry (DSC), and the heat distortion temperatures were measured in accordance with ASTM D648 (18.56 kgf). The glass transition temperature represents the temperature which is related to glass transition, in which glassy materials transition from a solid phase to a liquid phase, and the heat distortion temperature (HDT), as a measure showing the highest possible limit, represents the temperature at which some amount of distortion occurs when a given load is applied. Results from testing the heat resistance of the micro circuit board in which the thermosetting resin composition was used therein, are as shown in the following Table 11.

**[Table 11]**

| Application Examples | Glass Transition Temperature (Tg, °C) | Heat Distortion Temperature (°C) |
|---|---|---|
| Application Example 18 | 200 | 149 |
| Application Example 19 | 196 | 147 |
| Application Example 20 | 198 | 146 |
| Application Example 21 | 200 | 151 |
| Application Example 22 | 199 | 149 |
| Application Example 23 | 197 | 149 |
| Application Example 24 | 198 | 146 |
| Application Example 25 | 197 | 147 |
| Application Example 26 | 198 | 148 |
| Application Example 27 | 200 | 148 |
| Application Example 28 | 199 | 148 |
| Application Example 29 | 198 | 148 |
| Application Example 30 | 198 | 148 |
| Application Example 31 | 199 | 148 |
| Application Example 32 | 198 | 148 |
| Comparative Example 7 | 158 | 121 |
| Comparative Example 10 | 181 | 128 |
| Comparative Example 11 | 183 | 129 |

According to the above Table 11, the glass transition and heat distortion temperatures of the micro circuit board which includes the thermoplastic resin composition which was manufactured in Application Examples 18 to 32, which are exemplary embodiments of the present invention, are verified as being far superior to the glass transition and heat distortion temperatures of the micro circuit boards of Comparative Example 7, which excludes the metal powder. The glass transition and heat distortion temperatures were also verified as being excellent in comparison with those of Comparative Examples 10 and 11, which were manufactured to include excessive amounts of the metal powder. The glass transition and heat distortion temperatures of coatings which include excessive amounts of metal powder were actually found to be degraded when compared to coatings in which appropriate amounts of metal powder were included therein.

In addition, when using the thermoplastic resin compositions manufactured in the Application Examples 18 to 32, which are exemplary embodiments of the present invention, the respective glass transition and heat distortion temperatures are verified as being mostly similar. Application Example 21, in which the metal powder was introduced as a 1:1 mixture of nickel and iron, was verified as having the most outstanding physical properties, and Application Example 27, in which the metal powder was introduced as a 1:1:2 mixture of nickel, iron, and cobalt, respectively, was also verified as having superb glass transition and heat distortion temperatures.

Therethrough, the heat resistance of the laser direct structuring product which includes the thermoplastic resin composition according to an exemplary embodiment of the present invention may be verified through the glass transition and heat distortion temperatures as being improved by using the board for laser direct structuring in which the metal powder was introduced in manufacturing thereof. In addition, the glass transition and heat distortion temperatures were found to be changed through introducing various additives.

According to an exemplary embodiment of the present invention, an additive which can improve heat resistance may be introduced when manufacturing a coating composition for laser direct structuring or a thermoplastic resin composition, to manufacture a laser direct structured product. Therethrough, a micro circuit may be formed on various surfaces of a molded product, thereby simplifying the process, so that a product having a high degree of freedom of design may be manufactured, components may be installed by using a board which has improved heat resistance, and a micro circuit having a high degree of integration may be formed through laser direct irradiation to reduce the number of components used, and thus improve weight reduction and economic competitiveness. Therefore, superb effects may be realized in terms of design, economic competitiveness, and the environment.

The above-disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A coating composition for laser direct structuring, comprising:
about 60 to about 90 wt% of a thermoplastic resin;
about 0.1 to about 20 wt% of an additive for laser direct structuring;
about 0.1 to about 10 wt% of a seed-forming agent; and
about 0.001 to about 15 wt% of a metal powder.

2. The coating composition for laser direct structuring of claim 1, further comprising about 0.1 to about 10 wt% of a dispersing agent.

3. The coating composition for laser direct structuring of claim 1 or 2, wherein:
the thermoplastic resin includes one or more selected from the group consisting of polypropylene, polyester, polyphenylene oxide, polycarbonate, polyamide, poly (arylene ether), acrylonitrile butadiene styrene copolymer, polybutylene terephthalate, polyethylene terephthalate, poly urethane, poly acryl resin, poly vinyl chloride, polyphthalamide, polyphenylene sulfide, liquid crystal polymer, polyamideimide, and mixtures thereof;
the additive for laser direct structuring includes one or more selected from the group consisting of a heavy metal mixture oxide spinel, a copper salt, and mixtures thereof;
the seed-forming agent includes one or more selected from the group consisting of a copper salt and a copper salt complexing agent; and
the metal powder includes one or more selected from the group consisting of iron, manganese, cobalt, chrome, copper, vanadium, nickel, and mixtures thereof.

4. The coating composition for laser direct structuring of any of the claims 1 to 3, wherein the metal powder includes the nickel and iron at a weight ratio of about 1 : 0.85 to 1.75, or the nickel, iron, and cobalt at a weight ratio of about 1 : 0.85 to 1.75 : 0.75 to 2.25.

5. The coating composition for laser direct structuring of any of the claims 1 to 4, wherein the metal powder includes the nickel and chrome at a weight ratio of about 1 : 1.85 to 3.35, or the nickel, chrome, and manganese at a weight ratio of about 1 : 1.85 to 3.25 : 0.35 to 0.85.

6. The coating composition for laser direct structuring of any of the claims 1 to 5, wherein the metal powder has an average diameter of about 0.1 to about 10 µm, and a specific surface area of about 0.1 to about 1 m²/g.

7. The coating composition for laser direct structuring of any of the claims 1 to 6, wherein the additive for laser direct structuring further includes one or more flame retardants selected from the group consisting of a nitrogen-containing mixture, a phosphorus-containing mixture, a phosphorus-nitrogen condensate, magnesium hydroxide, and mixtures thereof, the one or more flame retardants being included in about 1 to about 40 parts by weight with respect to 100 parts by weight of the additive for laser direct structuring.

8. The coating composition for laser direct structuring of any of the claims 1 to 7, further comprising bisphenol A diphosphate, the bisphenol A diphosphate being included in about 6 to about 20 parts by weight with respect to 100 parts by weight of the additive for laser direct structuring.

9. A method of laser direct structuring, comprising:
a first step in which a coating composition, selected from among the coating compositions for laser direct structuring of any one of claims 1 to 8, is coated on a board for laser direct structuring to form a coating layer, and then the coating layer is irradiated with a laser to form a micro circuit on the coating layer and board; and
a second step, in which electroless plating is performed on the board on which the micro circuit was formed.

10. A thermoplastic resin composition for laser direct structuring, comprising:
about 80 to about 95 wt% of a thermoplastic resin;
about 0.1 to about 10 wt% of an additive for laser direct structuring;
about 0.1 to about 5 wt% of a seed-forming agent; and
about 0.001 to about 10 wt% of a metal powder.

11. The thermoplastic resin composition for laser direct structuring of claim 10, wherein the metal powder includes nickel and iron at a weight ratio of about 1 : 0.85 to 1.75, or nickel, iron, and cobalt at a weight ratio of about 1 : 0.85 to 1.75 : 0.75 to 2.25.

12. The thermoplastic resin composition for laser direct structuring of claim 10 or 11, wherein the metal powder includes nickel and chrome at a weight ratio of about 1 : 1.85 to 3.35, or nickel, chrome, and manganese at a weight ratio of about 1 : 1.85 to 3.25 : 0.35 to 0.85.

13. A method of laser direct structuring, comprising:
a first step in which one of the thermoplastic resin composition of any one of claims 10 to 12-is mixed and then extruded to form a board, and then the board is irradiated with a laser to form a micro circuit; and
a second step in which electroless plating is performed on the board on which the micro circuit was formed in the first step.

14. A micro circuit board, comprising:
a coating layer formed of the coating composition for laser direct structuring of any one of claims 1 to 8; and
a micro circuit formed through directly structuring the coating layer with a laser.

15. A micro circuit board comprising a micro circuit formed through directly structuring a surface of a board, which includes the thermoplastic resin composition of any one of claims 10 to 12, with a laser.
